# EUROPEAN PATENT APPLICATION

(11) **EP 4 756 271 A1**
(43) Date of publication of application: **10.06.2026**
(21) Application number: 25858017.4
(22) Date of filing: 31.03.2025
(51) Int. Cl.: F16K 35/00, F16K 31/122, F16K 31/06, G21C 9/00

(54) **FAIL-SAFE VALVE DEVICE AND NUCLEAR REACTOR FACILITY INCLUDING SAME**

(30) Priority: 27.08.2024 KR 20240115072
(71) Applicant: Korea Atomic Energy Research Institute, 34057 Daejeon (KR)
(72) Inventor: SHIN, Sung Min, Daejeon 34057 (KR); PARK, Jin Hee, Daejeon 34057 (KR)
(74) Representative: BCKIP Part mbB
(86) International application number: PCT/KR2025/004209
(87) International publication number: WO 2026/049192

(57) **Abstract**

A fail-safe isolation valve apparatus includes: a flow channel provided with a communication hole through which a fluid passes; a plug opening and closing the communication hole; a return member pressing the plug in a first direction to close the communication hole; and a plurality of support parts supporting the plug to maintain a first position. The plurality of support parts independently generate a supporting force to maintain the plug in the first position. When the plurality of support parts simultaneously lose the supporting force, the plug moves to a second position different from the first position.

## Description

### TECHNICAL FIELD

The present disclosure relates to a fail-safe isolation valve apparatus and a nuclear reactor facility including the same. This research was supported by the Innovative Small Modular Reactor (SMR) Technology Development Program, funded by the Korea government (Ministry of Trade, Industry and Energy), and was carried out at the Central Research Institute of Korea Hydro & Nuclear Power Co., Ltd. (Project Unique No.: 1415188098; Project No.: 00258118; R&D Project: Innovative SMR Technology Development Program; Research Project Title: Innovative SMR Comprehensive Safety Evaluation; and Project Period: 2024.01.01 ~ 2024.12.31).

### BACKGROUND ART

In a fail-safe valve, used for ensuring safety in industrial facilities, chemical processes, power plants, and the like, any unintentional loss of supporting force in all elements involved in generating the force, which is the power source applied to maintain a certain position during normal operation, leads to an unnecessary actuation of the safety function of the fail-safe valve.

Although such unnecessary actuation of the safety function of the fail-safe valve is reflected in the design (automatic movement to a safe position) and may not be a problem from the perspective of maintaining overall system safety, this poses a problem of reducing the operational availability of the overall system and incurring costs and time for restarting.

Considering the above situation, there is a need to satisfy a trade-off requirement where the valve acts upon an intentional loss of supporting force in an emergency, but unnecessary actuation should not occur during normal operation.

Meanwhile, nuclear power plants implement multiple barriers to prevent the propagation of potential accident effects. During normal operation, pipelines exist to protect fluid flow and signal lines penetrating the barriers for purposes such as heat exchange and maintenance. However, in the event of an unplanned shutdown or other accidents, a fail-safe isolation valve is required to be provided to prevent radioactive materials from escaping through these pipelines.

Therefore, a fail-safe isolation valve used in a nuclear power plant must not only actuate upon an intentional loss of supporting force to prevent the escape of radioactive materials in the event of an unplanned shutdown or other accidents, but there is also a need to develop a system and valve apparatus preventing unnecessary actuation due to an unintentional loss of supporting force during normal operation.

### DETAILED DESCRIPTION OF INVENTION

### TECHNICAL PROBLEMS

An embodiment of the present disclosure provides a fail-safe isolation valve apparatus and a nuclear reactor facility including the same, preventing an unnecessary isolation operation from occurring via another supporting force when one supporting force is unintentionally cut off, by using a plurality of support parts having different types of supporting forces.

### TECHNICAL SOLUTION

In accordance with an aspect of the present disclosure, there is provided a fail-safe isolation valve apparatus, including: a flow channel provided with a communication hole through which a fluid passes; a plug opening and closing the communication hole; a return member pressing the plug in a first direction to close the communication hole; and a plurality of support parts supporting the plug to maintain a first position, wherein the plurality of support parts independently generate a supporting force to maintain the plug in the first position, and wherein when the plurality of support parts simultaneously lose the supporting force, the plug moves to a second position different from the first position.

Further, the plug may include: a plug head seated in the communication hole; a rod extending from the plug head; and a plug body formed at an end of the rod.

Further, the plug head may be formed of an elastic material to seal the communication hole.

Further, an outer surface of the plug head may include a head inclined surface decreasing in width toward the first direction, and an inner surface of the communication hole comprises a hole inclined surface having the same inclination as the head inclined surface and contacting the head inclined surface.

Further, the return member may be formed as an elastic body, and an elastic force of the elastic body may be applied in a direction biasing the plug away from the first position when the plurality of support parts simultaneously lose the supporting force.

Further, the supporting force of each of the plurality of support parts may be greater than the elastic force generated by the return member.

Further, the fail-safe isolation valve apparatus may further include: a housing for accommodating the plug body; and a stopper protruding inward from an inner surface of the housing, wherein movement of the plug body in a direction opposite to the first direction may be limited by the stopper.

Further, the plurality of support parts may include: a first support member generating the supporting force with an electromagnetic force; and a second support member generating the supporting force with pneumatic pressure.

Further, the first support member may include: a housing for accommodating the plug body; and a coil wound on an outer surface of the housing and transmitting the electromagnetic force to the plug body.

Further, the second support member may include: an inlet for supplying compressed air into an interior of the housing; and a piston plate for pressing one end of the plug body via the compressed air supplied into the interior of the housing, and the housing may be sealed from an outside at portions other than the inlet.

Further, the fail-safe isolation valve apparatus may further include: a bellows tube for blocking the fluid from entering the plurality of support parts, and the bellows tube may be disposed in the flow channel to seal a gap between the plug head and the flow channel.

In accordance with another aspect of the present disclosure, there is provided a nuclear reactor facility, including: a reactor vessel; a containment vessel for accommodating the reactor vessel; and a fail-safe isolation valve apparatus disposed in the reactor vessel and blocking radioactive material inside from being discharged to an outside when an accident occurs in the reactor vessel, wherein the fail-safe isolation valve apparatus includes: a flow channel provided with a communication hole through which a fluid passes; a plug opening and closing the communication hole; a return member pressing the plug in a first direction to close the communication hole; and a plurality of support parts supporting the plug to maintain a first position, wherein the plurality of support parts independently generate a supporting force to maintain the plug in the first position, and wherein when the plurality of support parts simultaneously lose the supporting force, the plug moves to a second position different from the first position.

### EFFECT OF INVENTION

According to embodiments of the present disclosure, by performing the isolation operation only when all of the different types of power sources are released, the probability of an unnecessary isolation operation occurring may be significantly reduced.

Furthermore, by reducing the occurrence of unnecessary isolation operations through different heterogeneous power sources, the operational efficiency of the fail-safe isolation valve apparatus may be improved.

### BRIEF DESCRIPTION OF THE DRAWINGS

FIG. 1 is a block diagram illustrating a nuclear reactor facility including a fail-safe isolation valve apparatus according to a first embodiment of the present disclosure.
FIG. 2 is a block diagram illustrating a state before the fail-safe isolation valve apparatus according to the first embodiment of the present disclosure is isolated.
FIG. 3 is a block diagram illustrating a state in which the fail-safe isolation valve apparatus according to the first embodiment of the present disclosure is being isolated.
FIG. 4 is a partial block diagram illustrating the plug of FIG. 2.
FIG. 5 is a block diagram illustrating a state in which a first support member is driven and a second support member is not driven according to the first embodiment of the present disclosure.
FIG. 6 is a block diagram illustrating a state in which the first support member is not driven and the second support member is driven according to the first embodiment of the present disclosure.
FIG. 7 is a block diagram illustrating a fail-safe isolation valve apparatus including a bellows tube according to a second embodiment of the present disclosure.

### DETAILED DESCRIPTION OF THE INVENTION

Hereinafter, specific embodiments for implementing a spirit of the present disclosure will be described in detail with reference to the drawings.

In describing the present disclosure, detailed descriptions of known configurations or functions may be omitted to clarify the present disclosure.

When an element is referred to as being 'connected' to, 'supported' by, 'supplied' to, or 'transferred' to another element, it should be understood that the element may be directly connected to, supported by, supplied to, or transferred to another element, but that other elements may exist in the middle.

The terms used in the present disclosure are only used for describing specific embodiments, and are not intended to limit the present disclosure. Singular expressions include plural expressions unless the context clearly indicates otherwise.

Further, in the present disclosure, it is to be noted that expressions, such as the upper side, the lower side, or the side surface are described based on the illustration of drawings, but may be modified if directions of corresponding objects are changed. For the same reasons, some components are exaggerated, omitted, or schematically illustrated in the accompanying drawings, and the size of each component does not fully reflect the actual size.

Terms including ordinal numbers, such as first and second, may be used for describing various elements, but the corresponding elements are not limited by these terms. These terms are only used for the purpose of distinguishing one element from another element.

In the present specification, it is to be understood that the terms such as "including" are intended to indicate the existence of the certain features, areas, integers, steps, actions, elements, combinations, and/or groups thereof disclosed in the specification, and are not intended to preclude the possibility that one or more other certain features, areas, integers, steps, actions, elements, combinations, and/or groups thereof may exist or may be added.

Hereinafter, a specific configuration of a fail-safe isolation valve apparatus 30 and a nuclear reactor facility 1 including the same according to a first embodiment of the present disclosure will be described with reference to the drawings.

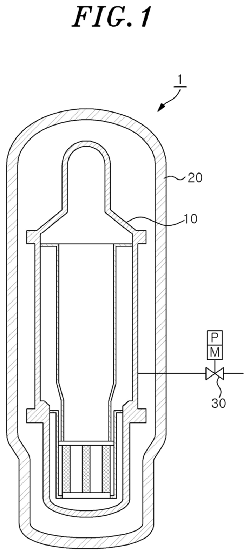

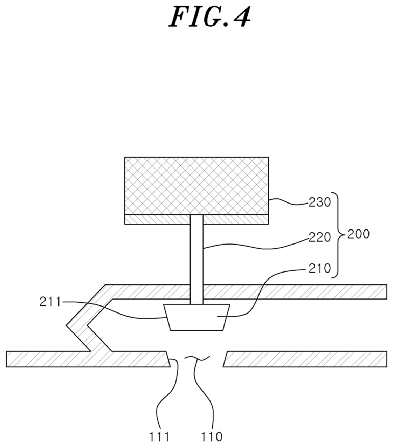

Referring to FIGS. 1 to 6, the nuclear reactor facility 1 of the present disclosure may generate steam for operating turbines, ships, facilities, and the like. The nuclear reactor facility 1 may be installed on the ground but is not limited thereto, and may be loaded onto mobile equipment such as ships and vehicles. The nuclear reactor facility 1 includes a reactor vessel 10, a containment vessel 20, and a fail-safe isolation valve apparatus 30.

The reactor vessel 10 may include a reactor core (not shown) for generating heat and steam using nuclear fission. Furthermore, a pressurizer (not shown) for regulating the internal pressure of the reactor vessel 10 may be formed on an upper portion of the reactor vessel 10. The reactor vessel 10 may discharge steam into the containment vessel 20 when the nuclear reactor facility 1 is in an accident state. The steam discharged into the containment vessel 20 may form condensed water. Furthermore, when the reactor vessel 10 is in an accident state, its internal pressure may decrease as steam is discharged.

The containment vessel 20 may accommodate the reactor vessel 10. The interior of the containment vessel 20 may be maintained in a vacuum state when the nuclear reactor facility 1 is in a normal operating state. Furthermore, when the nuclear reactor facility 1 is in an accident state, the internal pressure of the containment vessel 20 may increase due to the steam discharged from the reactor vessel 10, and condensed water may be accommodated.

The fail-safe isolation valve apparatus 30 isolates radioactive materials from being discharged to the outside from the reactor vessel 10 when the nuclear reactor facility 1 is in an accident state. The fail-safe isolation valve apparatus 30 may be disposed between the reactor vessel 10 and the containment vessel 20. The fail-safe isolation valve apparatus 30 includes a flow channel 100, a plug 200, a return member 300, and a support part 400.

The flow channel 100 provides a passage to guide the flow of a fluid P. This flow channel 100 may provide a passage through which radioactive fluid from the reactor vessel 10 moves when the nuclear reactor facility 1 is in a normal operating state. Furthermore, the flow channel 100 may be provided as an isolation barrier isolating the radioactive fluid when the nuclear reactor facility 1 is in an accident state. The flow channel 100 may be provided with a communication hole 110 through which the fluid P passes.

The communication hole 110 provides a passage through which the fluid P passes or is isolated. The communication hole 110 may be isolated or opened by a plug 200, which will be described later. The communication hole 110 may be provided with a hole inclined surface 111.

The hole inclined surface 111 is shaped to be in close contact with an outer surface of the plug 200 seated in the communication hole 110. The hole inclined surface 111 may be provided with the same inclination as an inclination of a head inclined surface 211 of the plug 200, which will be described later. The width of the hole inclined surface 111 may become narrower as the distance from the support part 400 increases. The hole inclined surface 111 may be formed on an inner surface of the communication hole 110.

The plug 200 serves to open and close the communication hole 110. The plug 200 may be disposed in a straight line with the communication hole 110. The plug 200 is provided to open and close the communication hole 110. The plug 200 includes a plug head 210, a rod 220, and a plug body 230.

The plug head 210 may be seated in the communication hole 110. The plug head 210 may be provided with an elastic material to improve sealing performance with the communication hole 110. The plug head 210 may be disposed inside the flow channel 100. The plug head 210 may close or open the communication hole 110 by moving to the communication hole 110 to be seated in the communication hole 110, or by moving in a direction away from the communication hole 110 to be detached from the communication hole 110.

The plug head 210 may include a head inclined surface 211. The head inclined surface 211 may be in close contact with the hole inclined surface 111. The head inclined surface 211 may be provided on an outer surface of the plug head 210. The width of the head inclined surface 211 may become narrower as the distance from the support part 400 increases.

The rod 220 connects the plug head 210 and the plug body 230. The rod 220 may extend linearly with respect to the communication hole 110. The rod 220 may be arranged to penetrate one surface of the flow channel 100 and extend into the interior of a housing 411, which will be described later.

The plug body 230 is formed at one end of the rod 220. The plug body 230 may be formed wider than the widths of the plug head 210 and the rod 220. The plug body 230 may be provided to be in close contact with an inner space of a housing 411, which will be described later. The plug body 230 may be provided to receive an external supporting force. In one embodiment, the plug body 230 may receive an electromagnetic force via an electromagnetic field generated by a coil 412, which will be described later, and generate a supporting force in one direction. Furthermore, one surface of the plug body 230 may be pressed by a pressing force generated by a piston plate 422, which will be described later, to generate a supporting force.

The return member 300 is provided to close or open the communication hole 110 via the plug 200. The return member 300 may be seated on one surface of the plug 200. The return member 300 is formed as an elastic body having an elastic force, and may move the plug 200 via this elastic force when the supporting force of the support part 400 is lost. Here, the elastic body may be a coil spring or a bushing. The support part 400 may be provided such that a supporting force is applied in a direction opposite to the direction in which the elastic force of the return member 300 is applied to the plug 200. The support part 400 may be provided to maintain the plug 200 in a state separated from the communication hole 110 in a normal mode where isolation of the flow channel 100 is not required. A plurality of support parts 400 may be provided, and the plurality of support parts 400 may be composed of different types of power sources. The support part 400 may apply a supporting force greater than the elastic force generated by the return member 300. The plurality of support parts 400 may include a first support member 410 and a second support member 420.

The first support member 410 may support the plug 200 based on electromagnetic force. The first support member 410 may be connected to a power line supplying electricity. The first support member 410 includes a housing 411, a coil 412, and a stopper 413.

The housing 411 is sized to accommodate the plug body 230. The housing 411 includes a plug body accommodation space, and the plug body 230 may be provided to be movable by a preset distance within the plug body accommodation space. The housing 411 may be provided with a stopper 413 so that the plug body 230, moving while losing the elastic force of the return member 300, may stop at a preset position. The stopper 413 may protrude inward by a preset length from an inner surface of the housing 411. The movement of the plug body 230 in the direction in which the supporting force of the support part 400 acts may be limited by the stopper 413.

The coil 412 generates an electromagnetic field to transmit electromagnetic force to the plug body 230. The coil 412 may be wound on an outer surface of the housing 411. The coil 412 may be provided with a cover member (not shown) covering the outside. The second support member 420 may support the plug 200 using compressed air as a power source. The second support member 420 may be connected to a compressor supplying compressed air. The second support member 420 may include an inlet 421 and a piston plate 422.

The inlet 421 allows compressed air to flow into the interior of the housing 411. The inlet 421 may be provided as a passage communicating with the interior of the housing 411. The inlet 421 may be provided with a valve (not shown) controlling the flow of fluid.

The piston plate 422 is moved by compressed air and presses the plug body 230. The piston plate 422 may be seated on one end surface of the plug body 230. The piston plate 422 may be provided to support the plug body 230 from moving in the direction of the communication hole 110 via compressed air.

A compression space formed by the inlet 421, the piston plate 422, and the inner surface of the housing 411 may be sealed from the outside to accommodate compressed air. The volume of the compression space may be changed according to the movement of the piston plate 422.

Hereinafter, the operation and effects of the fail-safe isolation valve apparatus having the above-described configuration will be described.

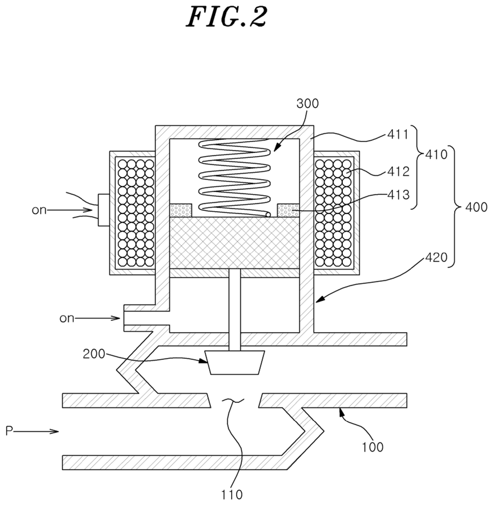

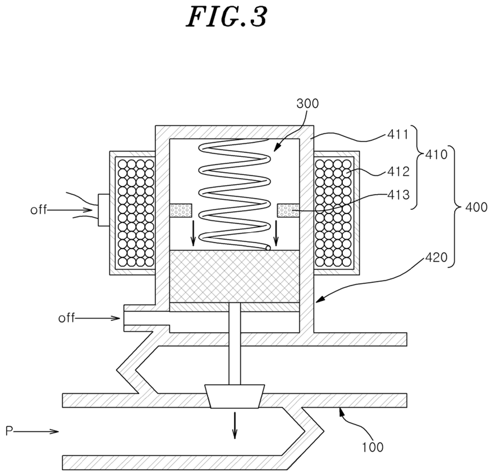

The fail-safe isolation valve apparatus 30 according to the first embodiment of the present disclosure, as illustrated in FIG. 3, releases the power sources of the support part 400 to stop the flow of fluid in an accident mode where isolation of the nuclear reactor facility 1 is required. Furthermore, as illustrated in FIG. 2, in a normal mode where isolation is not required, the power sources of the support part 400 are maintained to allow fluid to flow.

At this time, by providing the support part 400 as a plurality of support parts 400 having different types of power sources, even if one power source is cut off due to a malfunction, another power source maintains the supporting force, thereby preventing an unnecessary isolation operation from occurring in advance.

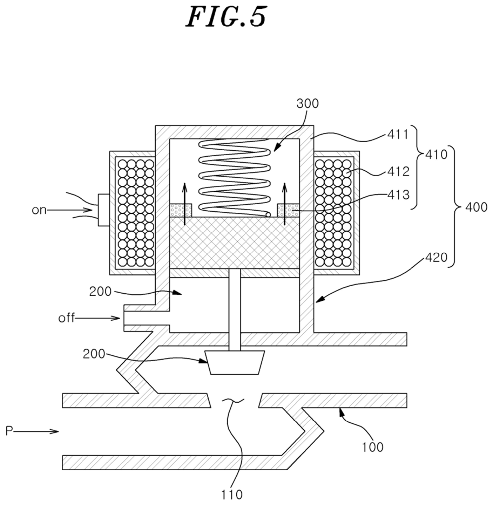

Specifically, referring to FIG. 5, when the compressed air, which is the power source of the second support member 420, is not supplied due to an unintentional malfunction, the supply of electricity, which is the power source of the first support member 410, may be maintained, thereby preventing an unnecessary isolation operation of the fail-safe isolation valve apparatus 30 from occurring.

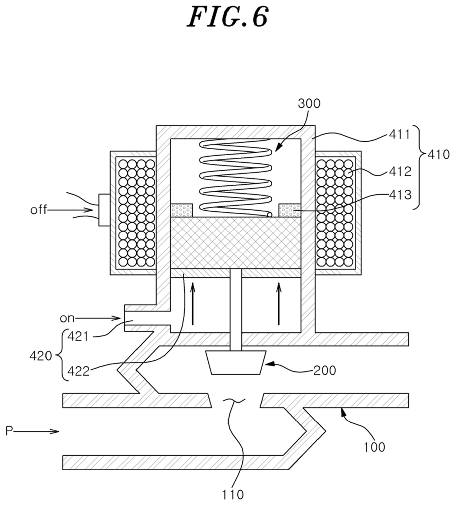

Furthermore, referring to FIG. 6, when the electricity, which is the power source of the first support member 410, is not supplied due to an unintentional malfunction, the supply of compressed air, which is the power source of the second support member 420, may be maintained, thereby preventing an unnecessary isolation operation of the fail-safe isolation valve apparatus 30 from occurring.

In other words, the support part 400 performs the isolation operation only when all of the different types of power sources are released, thereby significantly reducing the probability of an unnecessary isolation operation occurring and improving the operational efficiency of the fail-safe isolation valve apparatus 30.

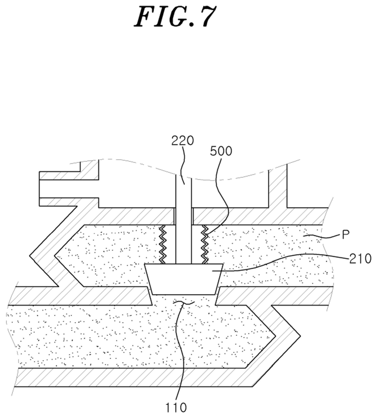

Meanwhile, in addition to this configuration, a bellows tube 500 according to a second embodiment of the present disclosure may be provided. Hereinafter, a second embodiment of the present disclosure will be described with reference to FIG. 7. In describing the second embodiment, the description will focus on the differences compared to the above-described embodiment, and the same explanations will refer to the above-described embodiment.

Referring to FIG. 7, the bellows tube 500 may be provided to block fluid flowing in the flow channel 100 from entering the support part 400. The bellows tube 500 may be connected in a gap between the plug head 210 and the flow channel 100. In one embodiment, the bellows tube 500 may be attached to an upper surface of the plug head 210 and a ceiling surface of the flow channel 100, and this attachment method may be bolting or using an adhesive.

The bellows tube 500 according to the second embodiment of the present disclosure may prevent fluid flowing in the flow channel 100 from leaking into other spaces. Here, as the length of the bellows tube 500 is varied by the contraction or expansion of a plurality of pleated portions, it may remain connected without detaching despite the reciprocating motion of the plug 200.

The examples of the present disclosure have been described above as specific embodiments, but these are only examples, and the present disclosure is not limited thereto, and should be construed as having the widest scope according to the technical spirit disclosed in the present specification. A person skilled in the art may combine/substitute the disclosed embodiments to implement a pattern of a shape that is not disclosed, but it also does not depart from the scope of the present disclosure. In addition, those skilled in the art can easily change or modify the disclosed embodiments based on the present specification, and it is clear that such changes or modifications also belong to the scope of the present disclosure.

## Claims

1. A fail-safe isolation valve apparatus, comprising:
a flow channel provided with a communication hole through which a fluid passes;
a plug opening and closing the communication hole;
a return member pressing the plug in a first direction to close the communication hole; and
a plurality of support parts supporting the plug to maintain a first position,
wherein the plurality of support parts independently generate a supporting force to maintain the plug in the first position, and
wherein when the plurality of support parts simultaneously lose the supporting force, the plug moves to a second position different from the first position.

2. The fail-safe isolation valve apparatus of claim 1, wherein the plug comprises:
a plug head seated in the communication hole;
a rod extending from the plug head; and
a plug body formed at an end of the rod.

3. The fail-safe isolation valve apparatus of claim 2, wherein the plug head is formed of an elastic material to seal the communication hole.

4. The fail-safe isolation valve apparatus of claim 2, wherein an outer surface of the plug head comprises a head inclined surface decreasing in width toward the first direction, and an inner surface of the communication hole comprises a hole inclined surface having the same inclination as the head inclined surface and contacting the head inclined surface.

5. The fail-safe isolation valve apparatus of claim 1, wherein the return member is formed as an elastic body, and an elastic force of the elastic body is applied in a direction biasing the plug away from the first position when the plurality of support parts simultaneously lose the supporting force.

6. The fail-safe isolation valve apparatus of claim 5, wherein the supporting force of each of the plurality of support parts is greater than the elastic force generated by the return member.

7. The fail-safe isolation valve apparatus of claim 6, further comprising:
a housing for accommodating the plug body; and
a stopper protruding inward from an inner surface of the housing,
wherein movement of the plug body in a direction opposite to the first direction is limited by the stopper.

8. The fail-safe isolation valve apparatus of claim 2, wherein the plurality of support parts comprises:
a first support member generating the supporting force with an electromagnetic force; and
a second support member generating the supporting force with pneumatic pressure.

9. The fail-safe isolation valve apparatus of claim 8, wherein the first support member comprises:
a housing for accommodating the plug body; and
a coil wound on an outer surface of the housing and transmitting the electromagnetic force to the plug body.

10. The fail-safe isolation valve apparatus of claim 9, wherein the second support member comprises:
an inlet for supplying compressed air into an interior of the housing; and
a piston plate for pressing one end of the plug body via the compressed air supplied into the interior of the housing, and
wherein the housing is sealed from an outside at portions other than the inlet.

11. The fail-safe isolation valve apparatus of claim 2, further comprising:
a bellows tube for blocking the fluid from entering the plurality of support parts,
wherein the bellows tube is disposed in the flow channel to seal a gap between the plug head and the flow channel.

12. A nuclear reactor facility, comprising:
a reactor vessel;
a containment vessel for accommodating the reactor vessel; and
a fail-safe isolation valve apparatus disposed in the reactor vessel and blocking radioactive material inside from being discharged to an outside when an accident occurs in the reactor vessel,
wherein the fail-safe isolation valve apparatus includes:
a flow channel provided with a communication hole through which a fluid passes;
a plug opening and closing the communication hole;
a return member pressing the plug in a first direction to close the communication hole; and
a plurality of support parts supporting the plug to maintain a first position,
wherein the plurality of support parts independently generate a supporting force to maintain the plug in the first position, and
wherein when the plurality of support parts simultaneously lose the supporting force, the plug moves to a second position different from the first position.
